# EUROPEAN PATENT APPLICATION

(11) **EP 4 478 466 A1**
(43) Date of publication of application: **18.12.2024**
(21) Application number: 22925937.9
(22) Date of filing: 10.02.2022
(51) Int. Cl.: H01M 10/04, H01M 50/534, H01M 50/538

(54) **BATTERY AND METHOD FOR PRODUCING BATTERY**

(71) Applicant: Vehicle Energy Japan Inc., Ibaraki 312-8505 (JP)
(72) Inventor: EGAWA, Hiroaki, Hitachinaka-shi, Ibaraki 312-8505 (JP)
(74) Representative: Mewburn Ellis LLP
(86) International application number: PCT/JP2022/005478
(87) International publication number: WO 2023/152916

(57) **Abstract**

A battery is provided which includes a current collection member and an electrode collector which are sufficiently bonded to each other. A battery 1 includes a charge/discharge body 10 which includes, for example, a positive electrode 11 provided with a collector (for example, a positive electrode current collection foil 11S) and an active material, and a current collection member (for example, a positive electrode current collection plate 21) bonded to the positive electrode current collection foil 11S. The positive electrode current collection plate 21 includes a first stiff portion 21p having predetermined stiffness, and a second stiff portion 21q adjacent to the first stiff portion 21p and higher in stiffness than the first stiff portion 21p. The second stiff portion 21q included in the positive electrode current collection plate 21 and the positive electrode current collection foil 11S of the positive electrode 11 are bonded to each other.

## Description

### Technical Field

This invention relates to a battery and a method for producing a battery.

### Background Art

Conventionally, a current collection member (so-called current collection plate) included in a battery and an electrode collector (so-called current collection foil) are made electrically conductive by being bonded to each other (refer to, for example, Patent Literature 1).

### Citation List

### Patent Literature

PTL 1: WO 2020/158255

### Summary of Invention

### Technical Problem

The current collection member and the electrode collector may cause variations in physical properties such as stiffness in a state before they are bonded. For this reason, even if the current collection member and the electrode collector are bonded based on the same bonding conditions in the mass production of batteries, there is a possibility that the current collection member and the electrode collector which are not sufficiently bonded are generated when variations in the physical properties of the current collection member and the electrode collector are relatively large.

That is, there is a possibility that among a plurality of current collection members and electrode collectors bonded in mass production of batteries, some current collection members and electrode collectors may be peeled off or the bonding may be insufficient. It is difficult for a battery using such a current collection member and an electrode collector to maintain reliability.

### Solution to Problem

A battery of the present invention, comprising includes: a charge/discharge body including electrodes each having a collector and an active material; and a current collection member bonded to the collector. At least one selected from the group of the current collection member and the collector includes a first stiff portion having predetermined stiffness, and a second stiff portion adjacent to the first stiff portion and higher in stiffness than the first stiff portion. The second stiff portion provided in at least one selected from the group of the current collection member and the collector, and the other of the current collection member and the collector are bonded to each other.

A method for producing a battery of the present invention is a producing method of the above battery. The method for producing the battery of the present invention includes a producing process of laminating and bonding the second stiff portion provided in at least one selected from the group of the current collection member and the collector, and the other of the current collection member and the collector to each other.

### Advantageous Effects of Invention

According to a battery of the present invention, the reliability of the battery can be improved by a current collection member and an electrode collector sufficiently bonded to each other. According to a battery producing method of the present invention, it is possible to suppress bonding failure between a current collection member and an electrode collector, thereby improving the reliability and productivity of the battery.

### Brief Description of Drawings

[FIG. 1] Fig. 1 is a perspective view illustrating a battery 1 according to a first embodiment.
[FIG. 2] Fig. 2 is an exploded perspective view illustrating the battery 1.
[FIG. 3] Fig. 3 is an exploded perspective view illustrating constituent members of the battery 1 on the positive electrode 11 side.
[FIG. 4] Fig. 4 is a perspective view illustrating a charge/discharge body 10 of the battery 1.
[Fig. 5] Fig. 5 is a side view illustrating a joint potion between a positive electrode current collection foil 11S of a positive electrode 11 and a positive electrode current collection plate 21 in the battery 1.
[Fig. 6] Fig. 6 is a side view illustrating a producing process of forming a second stiff portion 21q on a positive electrode current collection plate 21 by pressing the positive electrode current collection plate 21 in a producing method of the battery 1.
[Fig. 7] Fig. 7 is a side view illustrating a producing process in which the positive electrode current collection foil 11S of the positive electrode 11 and the second stiff portion 21q of the positive electrode current collection plate 21 are ultrasonically bonded following the producing process illustrated in Fig. 6.
[Fig. 8] Fig. 8 is a side view illustrating a joint portion between a positive electrode current collection foil 111S of a positive electrode 111 and a positive electrode current collection plate 121 in a battery 2 according to a second embodiment.
[Fig. 9] Fig. 9 is a side view illustrating a joint portion between a positive electrode current collection foil 111S of a positive electrode 111 and a positive electrode current collection plate 21 in a battery 3 according to a third embodiment.
[Fig. 10] Fig. 10 is a side view illustrating a joint portion between a positive electrode current collection foil 11S of a positive electrode 11 and a positive electrode current collection plate 21 via an adhesive 70 in a battery 4 according to a fourth embodiment.

### Description of Embodiments

Each embodiment of the present invention will be described with reference to the drawings. In order to facilitate understanding of each embodiment, the sizes and proportions of constituent members may be exaggerated in the drawings. In each embodiment, the same reference numerals are assigned to the same components, and their dual description will be omitted. In each embodiment, a left-handed XYZ orthogonal coordinate system having X, Y, and Z axes as coordinate axes is used. The arrows on each of the X-axis, Y-axis, and Z-axis indicate the positive direction of the coordinate axes. The X-axis is the coordinate axis in the longitudinal direction of a rectangular shaped battery. The Y axis is the coordinate axis in the lateral direction of the battery. The Z-axis is the coordinate axis in the height direction of the battery. However, the positional relationship represented by the XYZ orthogonal coordinate system is merely a relative positional relationship.

### <First Embodiment>

### (Configuration of Battery 1 according to First Embodiment)

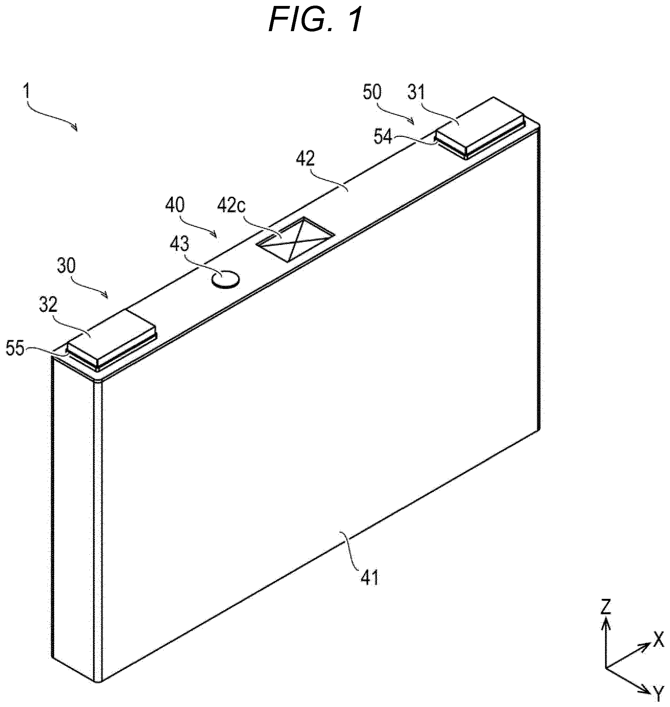

The configuration of the battery 1 will be described with reference to Figs. 1 to 5.

As illustrated in Figs. 1 to 5, the battery 1 includes a charge/discharge body 10 which charges and discharges electricity, a current collection member 20 connected to the charge/discharge body 10, and an external terminal 30 connected to the current collection member 20. Also, the battery 1 includes an exterior body 40 in which the constituent members of the battery 1 are accommodated or attached, an insulator 50 which insulates the constituent members of the battery 1 and the exterior body 40, and a sealing body 60 which seals the constituent members of the battery 1 and the exterior body 40.

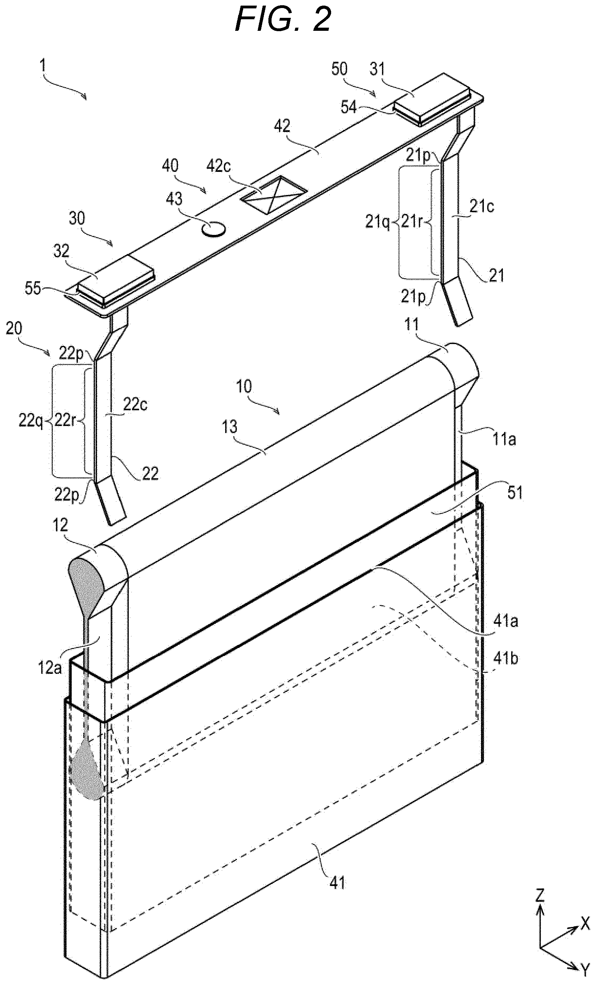

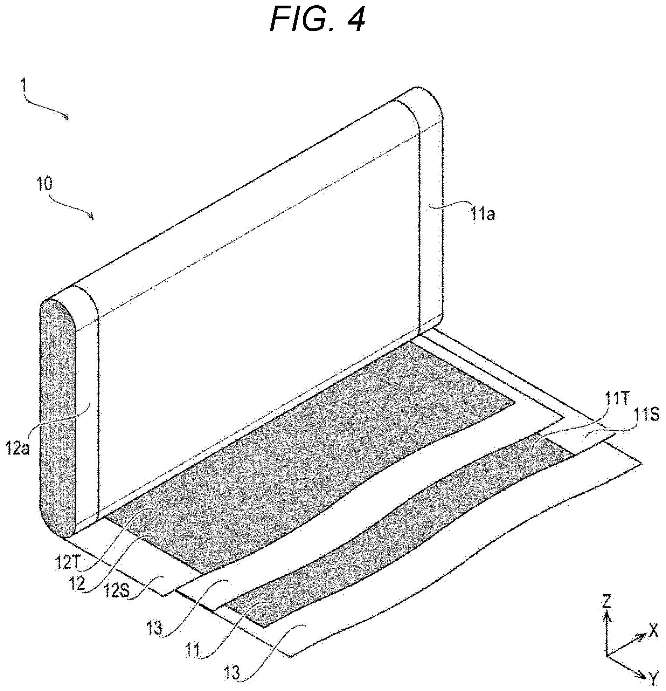

The charge/discharge body 10 charges and discharges electricity. The charge/discharge body 10 illustrated in FIGS. 2, 4 and 5 includes a positive electrode 11 (electrode), a negative electrode 12 (electrode), a separator 13, and an electrolyte. As illustrated in FIGS. 2 and 4, the charge/discharge body 10 is formed by winding constituent members in which the positive electrode 11, the separator 13, the negative electrode 12, and the separator 13 are laminated in this order, into a rectangular shape. The charge/discharge body 10 configured in a wound manner has the separator 13 disposed in the outermost layer.

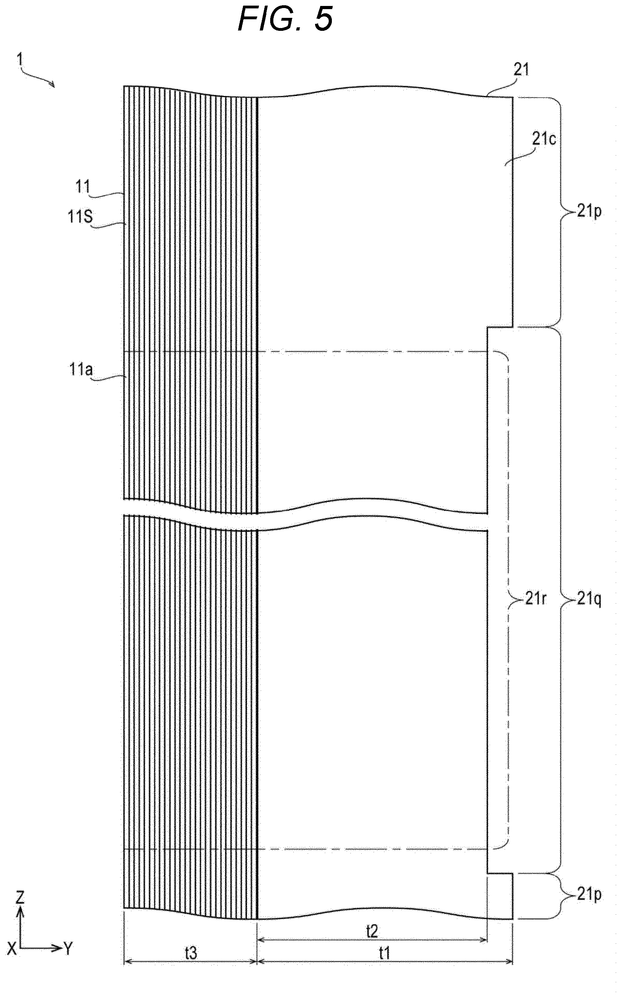

As illustrated in Fig. 4, the positive electrode 11 (electrode) includes an elongated positive electrode current collection foil 11S (collector), and a positive electrode active material layer 11T bonded to the positive electrode current collection foil 11S. The positive electrode 11 is wound together with the negative electrode 12 and the separator 13 to form a rectangular shape whose four corners are convexly curved. In the positive electrode 11, the negative electrode 12, and the separator 13, a pair of ends (thickness portions) exposed to the outside are positioned at both ends in the longitudinal direction X of the battery 1. A positive electrode current collection portion 11a is provided at one end of the positive electrode current collection foil 11S. The positive electrode current collection portion 11a is bonded to a positive electrode current collection plate 21. As illustrated in Figs. 2 and 5, the positive electrode current collection portion 11a is compressed in the lateral direction Y of the battery 1 in a wound and bundled state to remove a gap. The positive electrode current collection portion 11a is compressed, but needs not be plastically deformed. The positive electrode current collection portion 11a extends along the height direction Z of the battery 1. The positive electrode current collection portion 11a has a thickness, for example, 0.1 mm to 1.4 mm along the lateral direction Y of the battery 1 in an unbundled state.

The positive electrode current collection portion 11a of the positive electrode 11 is formed of, for example, aluminum or an aluminum alloy. The positive electrode active material layer 11T contains a positive electrode active material (active material) comprised of a lithium-containing composite oxide, a binder, and a conductive assistant, etc. For example, metal elements such as nickel (Ni), cobalt (Co), and manganese (Mn), and lithium (Li) are used for the lithium-containing composite oxide.

As illustrated in Fig. 4, the negative electrode 12 (electrode) includes an elongated negative electrode current collection foil 12S (collector) and a negative electrode active material layer 12T bonded to the negative electrode current collection foil 12S. One end of the negative electrode current collection foil 12S is provided with a negative electrode current collection portion 12a. The negative electrode current collection portion 12a of the negative electrode current collection foil 12S faces the positive electrode current collection portion 11a of the positive electrode current collection foil 11S along the longitudinal direction X. The negative electrode current collection portion 12a is bonded to a negative electrode current collection plate 22. The negative electrode current collection portion 12a is compressed in the lateral direction Y of the battery 1 in a wound state to remove a gap. The negative electrode current collection portion 12a is compressed, but needs not be plastically deformed. The negative electrode current collection portion 12a extends along the height direction Z of the battery 1. The negative electrode current collection portion 12a has a thickness, for example, 0.05 mm to 0.7 mm along the lateral direction Y of the battery 1 in an unbundled state.

The negative electrode current collection portion 12a of the negative electrode 12 is formed of, for example, copper or a copper alloy. The negative electrode active material layer 12T contains a negative electrode active material (active material) made of a carbon-based material, a binder, and a conductive assistant, etc. For example, graphite is used for the carbon-based material.

The separator 13 insulates the positive electrode 11 and the negative electrode 12 from each other as illustrated in Fig. 4. The separator 13 is impregnated with an electrolyte. The separator 13 is formed in an elongated shape. The separator 13 is comprised of a porous material. polyethylene (PE) or polypropylene (PP) is used for the separator 13. A heat-resistant insulating member may be used instead of the separator 13. For example, ceramics is used for the heat-resistant insulating member. Such a configuration is a so-called separatorless configuration.

The electrolyte corresponds to a so-called electrolytic solution. The electrolyte is impregnated in the separator 13. The electrolyte contains an organic solvent, supporting salt, and an additive. For example, carbonic acid ester or the like is used for the organic solvent. For example, lithium salt is used for the supporting salt.

The current collection member 20 is made conductive to the charge/discharge body 10. The current collection member 20 is bonded to the current collection foil of the electrode. The current collection member 20 illustrated in Figs. 2, 3, and 5 includes the positive electrode current collection plate 21 (current collection member) and the negative electrode current collection plate 22 (current collection member).

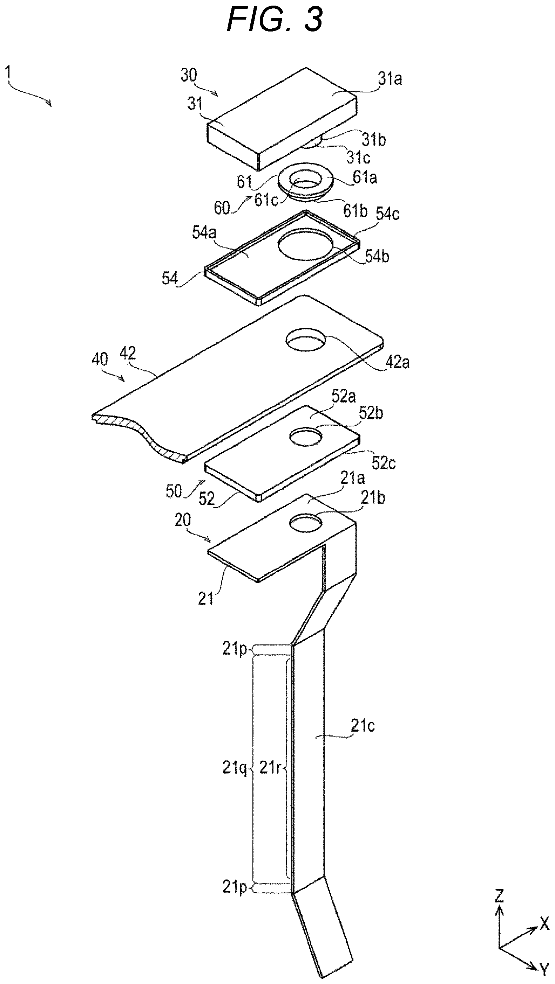

The positive electrode current collection plate 21 (current collection member) makes the positive electrode current collection foil 11S of the positive electrode 11 and a positive electrode terminal 31 conductive. As illustrated in Fig. 3, the positive electrode current collection plate 21 includes a base portion 21a, an insertion hole 21b, and a current collection portion 21c. The base portion 21a is formed in a plate shape and bonded to the positive electrode terminal 31. The insertion hole 21b penetrates the base portion 21a. An insertion portion 31b of the positive electrode terminal 31 is inserted into the insertion hole 21b. The current collection portion 21c is formed in a longer shape than the base portion 21a and extends from the base portion 21a toward the charge/discharge body 10. The current collection portion 21c is bent along the outer shape of the positive electrode current collection portion 11a of the positive electrode 11. The positive electrode current collection plate 21 is formed of, for example, aluminum or an aluminum alloy.

As illustrated in Figs. 2, 3, and 5, the positive electrode current collection plate 21 includes a first stiff portion 21p and a second stiff portion 21q in the current collection portion 21c. The current collection portion 21c has a thickness, for example, 0.5 mm to 3 mm along the lateral direction Y of the battery 1. The first stiff portion 21p has predetermined stiffness. The second stiff portion 21q is adjacent to the first stiff portion 21p along the height direction Z of the battery 1 and is higher in stiffness than the first stiff portion 21p. As illustrated in Fig. 5, in the direction along the lateral direction Y of the battery 1, a second thickness t2 of the second stiff portion 21q is thinner than a first thickness t1 of the first stiff portion 21p. The second stiff portion 21q is formed by plastically deforming a portion adjacent to the first stiff portion 21p of the positive electrode current collection plate 21 by, for example, cold working. The thickness of the second stiff portion 21q is equivalent to the thickness of the first stiff portion 21p in a state before the cold working. That is, the second stiff portion 21q is rolled from the first thickness t1 to the second thickness t2 accompanying the cold working.

Here, the stiffness represents the hardness of an object. The stiffness is defined by, for example, hardness measured by a Vickers hardness test or the like, and a stress-strain curve or the like measured by a tensile test or the like. The Vickers hardness test is stipulated in JIS Z 2244, for example. The stress-strain curve represents the hardness of an object based on a Young's modulus. The lower the Young's modulus, the higher the hardness of the object.

The second stiff portion 21q of the positive electrode current collection plate 21 is bonded to the positive electrode current collection foil 11S of the positive electrode 11 as illustrated in Fig. 5. A bonding portion 21r included in the second stiff portion 21q is bonded to the positive electrode current collection foil 11S. The bonding portion 21r is bonded to the positive electrode current collection foil 11S by ultrasonic waves. As illustrated in Fig. 5, the second thickness t2 of the second stiff portion 21q is thicker than a third thickness t3 of at least one positive electrode current collection foil 11S. The third thickness t3 is the thickness of at least one positive electrode current collection foil 11S among the bundled multiple positive electrode current collection foils 11S.

The negative electrode current collection plate 22 (current collection member) makes the negative electrode current collection foil 12S of the negative electrode 12 and a negative electrode terminal 32 conductive. The shape of the negative electrode current collection plate 22 corresponds to one obtained by reversing the shape of the positive electrode current collection plate 21 with the height direction Z as a boundary on the basis of the center in the longitudinal direction X of the battery 1. Similar to the positive electrode current collection plate 21, the negative electrode current collection plate 22 includes a base portion, an insertion hole, and a current collection portion. The base portion is formed in a plate shape and bonded to the negative electrode terminal 32. The insertion hole penetrates the base portion. An insertion portion of the negative electrode terminal 32 is inserted into the insertion hole. The current collection portion is formed in a longer shape than the base portion and extends from the base portion toward the charge/discharge body 10. The current collection portion is bent along the outer shape of the negative electrode current collection portion 12a of the negative electrode 12. The negative electrode current collection plate 22 is formed of, for example, copper or a copper alloy.

As illustrated in Fig. 2, the negative electrode current collection plate 22 includes, in the current collection portion 22c, a first stiff portion 22p and a second stiff portion 22q. The first stiff portion 22p has predetermined stiffness. The second stiff portion 22q is adjacent to the first stiff portion 22p along the height direction Z of the battery 1 and higher in stiffness than the first stiff portion 22p. A second thickness of the second stiff portion 22q is thinner than a first thickness of the first stiff portion 22p. The second stiff portion 22q is formed by plastically deforming a portion adjacent to the first stiff portion 22p of the negative electrode current collection plate 22 by, for example, cold working. The thickness of the second stiff portion 22q is equivalent to the thickness of the first stiff portion 22p in a state before the cold working. That is, the second stiff portion 22q is rolled from the first thickness to the second thickness accompanying the cold working.

The second stiff portion 22q of the negative electrode current collection plate 22 is bonded to the negative electrode current collection foil 12S of the negative electrode 12. A bonding portion 22r included in the second stiff portion 22q is bonded to the negative electrode current collection foil 12S. The bonding portion 22r is bonded to the negative electrode current collection foil 12S by ultrasonic waves. The second thickness of the second stiff portion 22q is thicker than a third thickness of at least one negative electrode current collection foil 12S. The third thickness is the thickness of at least one negative electrode current collection foil 12S among the bundled multiple negative electrode current collection foils 12S.

The external terminal 30 is connected to the current collection member 20. The external terminal 30 illustrated in Figs. 1 to 3 include the positive electrode terminal 31 and the negative electrode terminal 32.

The positive electrode terminal 31 is connected to the positive electrode current collection plate 21. As illustrated in Fig. 3, the positive electrode terminal 31 includes a rectangular plate-shaped base portion 31a, a columnar-shaped insertion portion 31b protruding downward from the base portion 31a, and a cylindrical bonding portion 31c protruding downward from the peripheral edge of the base portion 31a.

The base portion 31a of the positive electrode terminal 31 is in contact with a base portion 54a of a positive electrode side second insulating plate 54. The insertion portion 31b is inserted into an insertion hole 54b of the positive electrode side second insulting plate 54, a positive electrode side insertion hole 42a of a lid 42, an insertion hole 52b of a positive electrode side first insulating plate 52, and the insertion hole 21b of the positive electrode current collection plate 21. The bonding portion 31c protrudes downward from the insertion hole 21b of the positive electrode current collection plate 21 and is expanded radially outward to be bonded to the positive electrode current collection plate 21. That is, the bonding portion 31c is crimped to the peripheral edge of the insertion hole 21b of the positive electrode current collection plate 21. Further, the bonding portion 31c is welded to the peripheral edge of the insertion hole 21b of the positive electrode current collection plate 21. The positive electrode terminal 31 is formed of, for example, aluminum or an aluminum alloy.

The negative electrode terminal 32 is connected to the negative electrode current collection plate 22. The shape of the negative electrode terminal 32 is equivalent to one obtained by reversing the shape of the positive electrode terminal 31 with the height direction Z as a boundary on the basis of the center in the longitudinal direction X of the battery 1. Similar to the positive electrode terminal 31, the negative electrode terminal 32 includes a rectangular plate-shaped base portion, a columnar shaped insertion portion protruding downward from the base portion, and a cylindrical bonding portion protruding downward from the peripheral edge of the base portion.

The base portion of the negative electrode terminal 32 is in contact with a base portion of a negative electrode side second insulating plate 55. The insertion portion is inserted into an insertion hole of the negative electrode side second insulating plate 55, a negative electrode side insertion hole of the lid 42, an insertion hole of a negative electrode side first insulating plate, and the insertion hole of the negative electrode current collection plate 22. The bonding portion protrudes downward from the insertion hole of the negative electrode current collection plate 22 and is expanded radially outward to be bonded to the negative electrode current collection plate 22. That is, the bonding portion is crimped to the peripheral edge of the insertion hole of the negative electrode current collection plate 22. Further, the bonding portion is welded to the peripheral edge of the insertion hole of the negative electrode current collection plate 22. The negative electrode terminal 32 is formed of, for example, copper or a copper alloy.

The constituent members of the battery 1 are accommodated in or attached to the exterior body 40. The exterior body 40 illustrated in Figs. 1 to 3 includes a container 41, the lid 42, and a sealing plug 43.

The container 41 accommodates the charge/discharge body 10 and the like covered with an insulating cover 51 as illustrated in Fig. 2. The container 41 is configured by a rectangular shaped metal can. The container 41 includes an opening 41a opened in the height direction Z, and a housing portion 41b which is continuous with the opening 41a. The container 41 is formed of, for example, aluminum or an aluminum alloy.

As illustrated in Figs. 1 and 2, the lid 42 seals the opening 41a of the container 41. The lid 42 is formed of a long plate-shaped metal plate. As illustrated in Fig. 3, the lid 42 is formed with the positive electrode side insertion hole 42a configured by a circular through hole on one end side in the longitudinal direction X. The insertion portion 31b of the positive electrode terminal 31 is inserted into the positive electrode side insertion hole 42a. The lid 42 is formed with a negative electrode side insertion hole configured by a circular through hole on the other end side in the longitudinal direction X. The insertion portion of the negative electrode terminal 32 is inserted into the negative electrode side insertion hole. The lid 42 has a liquid injection hole formed by a circular through hole between the positive electrode side insertion hole 42a and the negative electrode side insertion hole. The electrolyte is injected from the lid 42 toward the container 41 via the liquid injection hole. The sealing plug 43 is inserted into the liquid injection hole. As illustrated in Fig. 1, the lid 42 is provided with a cleavage valve 42c in the center thereof in the longitudinal direction X. The lid 42 is formed of, for example, aluminum or an aluminum alloy.

The sealing plug 43 seals the liquid injection hole of the lid 42 as illustrated in Figs. 1 and 2. The sealing plug 43 is welded to the lid 42. The sealing plug 43 is formed of, for example, aluminum or an aluminum alloy.

The insulator 50 insulates the constituent members of the battery 1 and the exterior body 40. The insulator 50 illustrated in Figs. 1 to 3 includes the insulating cover 51, the positive electrode side first insulating plate 52, the negative electrode side first insulating plate, the positive electrode side second insulating plate 54, and the negative electrode side second insulating plate 55.

The insulating cover 51 covers the charge/discharge body 10 and insulates the charge/discharge body 10 from the container 41 as illustrated in Fig. 2. The insulating cover 51 is formed of a polyhedral-shaped sheet. The insulating cover 51 is folded into a box shape to form a pentahedral shape. The insulating cover 51 is open at a portion facing the lid 42. The insulating cover 51 is formed of, for example, polypropylene.

The positive electrode side first insulating plate 52 insulates the positive electrode current collection plate 21 and the lid 42 as illustrated in Fig. 3. The positive electrode side first insulating plate 52 includes a rectangular plate-shaped base portion 52a, an insertion hole 52b penetrating the base portion 52a, and a convex portion 52c which annularly surrounds the side edge of the base portion 52a and protrudes in the direction away from the lid 42. In the positive electrode side first insulating plate 52, the positive electrode current collection plate 21 is accommodated in a space defined by the base portion 52a and the convex portion 52c. The insertion portion 31b of the positive electrode terminal 31 is inserted into the insertion hole 52b. The positive electrode side first insulating plate 52 is formed of, for example, an insulating resin.

The negative electrode side first insulating plate insulates the negative electrode current collection plate 22 and the lid 42. The shape of the negative electrode side first insulating plate is equivalent to one obtained by reversing the shape of the positive electrode side first insulating plate 52 with the height direction Z as a boundary on the basis of the center in the longitudinal direction X of the battery 1. Similar to the positive electrode side first insulating plate 52, the negative electrode side first insulating plate includes a rectangular plate-shaped base portion, an insertion hole penetrating the base portion, and a convex portion which annularly surrounds the side edge of the base portion and protrudes in the direction away from the lid 42. In the negative electrode side first insulating plate, the negative electrode current collection plate 22 is accommodated in a space defined by the base portion and the convex portion. The insertion portion of the negative electrode terminal 32 is inserted into the insertion hole. The negative electrode side first insulating plate is formed of, for example, an insulating resin.

The positive electrode side second insulating plate 54 insulates the positive electrode terminal 31 and the lid 42 as illustrated in Fig. 3. The positive electrode side second insulating plate 54 includes a rectangular plate-shaped base portion 54a, an insertion hole 54b penetrating the base portion 54a, and a convex portion 54c which annularly surrounds the side edge of the base portion 54a and protrudes in the direction away from the lid 42. In the positive electrode side second insulating plate 54, the positive electrode terminal 31 is accommodated in a space configured by the base portion 54a and the convex portion 54c. The insertion portion 31b of the positive electrode terminal 31 is inserted into the insertion hole 54b. The positive electrode side second insulating plate 54 is formed of, for example, an insulating resin.

The negative electrode side second insulating plate 55 insulates the negative electrode terminal 32 and the lid 42 from each other. The shape of the negative electrode side second insulating plate 55 is equivalent to one obtained by reversing the shape of the positive electrode side second insulating plate 54 with the height direction Z as a boundary on the basis of the center in the longitudinal direction X of the battery 1. Similar to the positive electrode side second insulating plate 54, the negative electrode side second insulating plate 55 includes a rectangular plate-shaped base portion, an insertion hole penetrating the base portion, and a convex portion which annularly surrounds the side edge of the base portion and protrudes in the direction away from the lid 42. In the negative electrode side second insulating plate 55, the negative electrode terminal 32 is accommodated in a space defined by the base portion and the convex portion. The insertion portion of the negative electrode terminal 32 is inserted into the insertion hole. The negative electrode side second insulating plate 55 is formed of, for example, an insulating resin.

The sealing body 60 seals the constituent members of the battery 1 and the exterior body 40. The sealing body 60 illustrated in Fig. 3 includes a positive electrode side gasket 61 and a negative electrode side gasket.

The positive electrode side gasket 61 insulates the positive electrode side second insulating plate 54 and the lid 42 as illustrated in Fig. 3. The positive electrode side gasket 61 is formed in a cylindrical shape. The positive electrode side gasket 61 includes a first insertion portion 61a having a relatively large outer diameter, a second insertion portion 61b which is continuous with the first insertion portion 61a and has a relatively small outer diameter, and an insertion hole 61c penetrating the first insertion portion 61a and the second insertion portion 61b. The first insertion portion 61a of the positive electrode side gasket 61 is inserted into the insertion hole 54b of the positive electrode side second insulating plate 54. The second insertion portion 61b of the positive electrode side gasket 61 is inserted into the positive electrode side insertion hole 42a of the lid 42. The insertion portion 31b of the positive electrode terminal 31 is inserted into the insertion hole 61c. The positive electrode side gasket 61 is formed of, for example, rubber with insulation and elasticity.

The negative electrode side gasket insulates the negative electrode side second insulating plate 55 and the lid 42 from each other. The shape of the negative electrode side gasket is equivalent to one obtained by reversing the shape of the positive electrode side gasket 61 with the height direction Z as a boundary on the basis of the center in the longitudinal direction X of the battery 1. Similar to the positive electrode side gasket 61, the negative electrode side gasket includes a first insertion portion having a relatively large outer diameter, a second insertion portion continuous with the first insertion portion and having a relatively small outer diameter, and an insertion hole penetrating the first insertion portion and the second insertion portion. The first insertion portion of the negative electrode side gasket is inserted into the insertion hole of the negative electrode side second insulating plate 55. The second insertion portion of the negative electrode gasket is inserted into the negative electrode side insertion hole of the lid 42. The insertion portion of the negative electrode terminal 32 is inserted into the insertion hole. The negative electrode gasket is formed of, for example, rubber with insulation and elasticity.

### (Producing Method of Battery 1 according to First Embodiment)

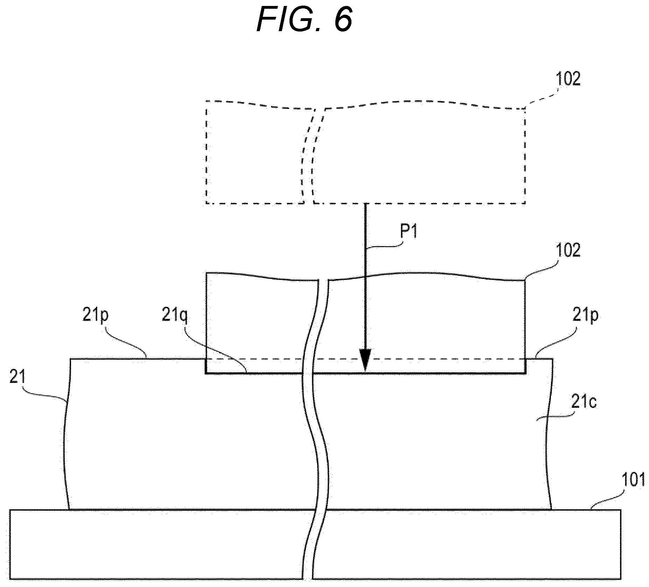

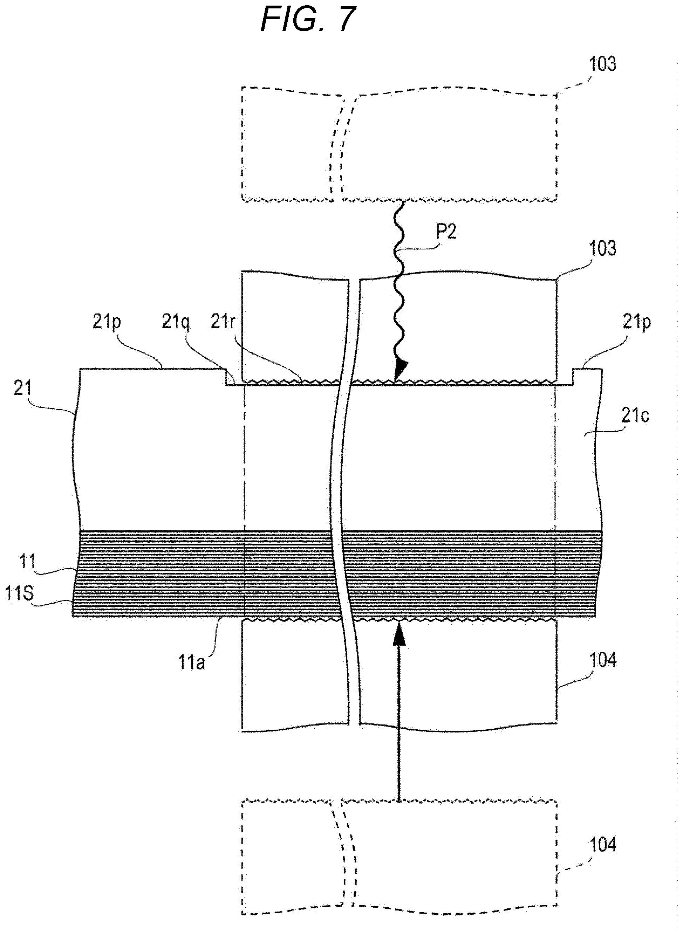

A method for producing the battery 1 will be described with reference to Figs. 6 and 7. Among the methods of producing the battery 1, a producing method specific to the battery 1 according to the first embodiment will be described.

### (Press Processing in Producing Process)

Fig. 6 illustrates a producing process in which the second stiff portion 21q of the positive electrode current collection plate 21 is formed by pressing the positive electrode current collection plate 21. In this producing process, for example, the second stiff portion 21q is formed by pressing a region adjacent to the first stiff portion 21p of the positive electrode current collection plate 21. The stiffness of the second stiff portion 21q formed by pressing becomes higher in stiffness than the first stiff portion 21p due to work hardening. In this producing process, a press machine 102 is brought close to a table 101 on which the positive electrode current collection plate 21 is placed, and the region adjacent to the first stiff portion 21p of the positive electrode current collection plate 21 is partially rolled by the press machine 102. The second stiff portion 21q is formed on the positive electrode current collection plate 21 by a pressing force P1 input from the press machine 102 to the positive electrode current collection plate 21. That is, the second stiff portion 21q is formed in a region adjacent to the first stiff portion 21p of the positive electrode current collection plate 21 by cold working. In this producing process, a thickness reduction ratio S of the region of the second stiff portion 21q is set to 0%<S≤10% by pressing the positive electrode current collection plate 21. As illustrated in Fig. 5, the second thickness t2 of the second stiff portion 21q becomes thinner than the first thickness t1 of the first stiff portion 21p by up to 10%.

### (Ultrasonic Bonding in Producing Process)

Fig. 7 illustrates a producing process in which the positive electrode current collection foil 11S of the positive electrode 11 and the second stiff portion 21q of the positive electrode current collection plate 21 are bonded by ultrasonic waves following the producing process of cold working illustrated in Fig. 6. In this producing process, a horn 103 and an anvil 104 sandwich the positive electrode current collection foil 11S and the second stiff portion 21q. The positive electrode current collection foil 11S and the second stiff portion 21q are ultrasonically bonded by an ultrasonic wave P2 input from the horn 103 to the positive electrode current collection foil 11S.

### (Effects of Battery 1 and Method for Producing Battery 1 of First Embodiment)

A description will be made about effects of the battery 1 and the method for producing the battery 1 will be described.

The effects of the battery 1 and the producing method of the battery 1 will be described with respect to the positive electrode 11 side. In the first embodiment, the effect on the negative electrode 12 side is the same as the effect on the positive electrode 11 side. Therefore, description about the negative electrode 12 side will be omitted.

In the battery 1, the positive electrode current collection plate 21 includes, as illustrated in Fig. 5, the first stiff portion 21p having predetermined stiffness, and the second stiff portion 21q adjacent to the first stiff portion 21p and higher in stiffness than the first stiff portion 21p. The second stiff portion 21q of the positive electrode current collection plate 21 and the positive electrode current collection foil 11S of the positive electrode 11 are bonded to each other. As shown in Fig. 7, the producing method of the battery 1 includes a producing process of bonding the second stiff portion 21q of the positive electrode current collection plate 21 and the positive electrode current collection foil 11S of the positive electrode 11 to each other.

According to such a configuration, the stiffness of the positive electrode current collection plate 21 is partially increased to form the second stiff portion 21q before bonding the positive electrode current collection plate 21 and the positive electrode current collection foil 11S, thereby enabling variations in physical properties of the second stiff portion 21q to be suppressed. By suppressing the variations in the physical properties of the positive electrode current collection plate 21, it is possible to relatively increase the ratio of the positive electrode current collection plate 21 and the positive electrode current collection foil 11S which meet predetermined bonding conditions in mass production. The bonding conditions are conditions under which the positive electrode current collection plate 21 and the positive electrode current collection foil 11S can be sufficiently bonded. Therefore, it is possible to reduce the possibility that the positive electrode current collection plate 21 and the positive electrode current collection foil 11S cannot meet the bonding conditions optimized based on the predetermined specifications, and they are peeled off without being sufficiently bonded to each other. Therefore, the yield of the charge/discharge body 10 including the positive electrode current collection plate 21 and the positive electrode 11 can be improved. Specifically, it is possible to suppress conduction failure (circuit open) due to the fact that after the second stiff portion 21q of the positive electrode current collection plate 21 and the positive electrode current collection foil 11S are bonded to each other, the second stiff portion 21q of the positive electrode current collection plate 21 and the positive electrode current collection foil 11S are peeled off. Further, it is possible to suppress an increase in electrical resistance due to the fact that after the second stiff portion 21q of the positive electrode current collection plate 21 and the positive electrode current collection foil 11S are bonded, the bonding between the second stiff portion 21q of the positive electrode current collection plate 21 and the positive electrode current collection foil 11S becomes insufficient. The insufficient bonding means that the second stiff portion 21q of the positive electrode current collection plate 21 and the positive electrode current collection foil 11S are partially peeled off.

Therefore, according to the battery 1, the reliability of the battery 1 can be improved by the positive electrode current collection plate 21 and the positive electrode current collection foil 11S of the positive electrode 11 sufficiently bonded to each other. Also, according to the producing method of the battery 1, the reliability and productivity of the battery 1 can be improved by suppressing a bonding failure between the positive electrode current collection plate 21 and the positive electrode current collection foil 11S of the positive electrode 11. Further, according to such a configuration, since variations in the physical properties of the positive electrode current collection plate 21 can be suppressed, it is possible to use materials which have large variations in the physical properties but are inexpensive.

The bonding portion 21r included in the second stiff portion 21q of the positive electrode current collection plate 21 and the positive electrode current collection foil 11S are bonded to each other. As illustrated in Fig. 5, the bonding portion 21r is included in the second stiff portion 21q and constitutes most of the second stiff portion 21q. In principle, the bonding portion 21r can constitute the entire second stiff portion 21q. However, considering the stable propagation of ultrasonic energy to the bonding portion when the positive electrode current collection plate 21 and the positive electrode current collection foil 11S of the positive electrode 11 are ultrasonically bonded, the portion excluding the outer edge of the second stiff portion 21q is preferably configured as the bonding portion 21r. Also, considering the prevention of leakage of laser light to the surroundings of the welded portion when the positive electrode current collection plate 21 and the positive electrode current collection foil 11S of the positive electrode 11 are laser-welded, the portion excluding the outer edge of the second stiff portion 21q is preferably configured as the bonding portion 21r. Further, considering the prevention of excessive distortion of the bonding portion when the positive electrode current collection plate 21 and the positive electrode current collection foil 11S of the positive electrode 11 are crimped and bonded to each other, the portion excluding the outer edge of the second stiff portion 21q is preferably configured as the bonding portion 21r. When producing considering the above is performed in the ultrasonic bonding, laser welding, and crimp bonding, the first stiff portion 21p, the second stiff portion 21q, and the bonding portion 21r included in the second stiff portion 21q are present after the positive electrode current collection plate 21 and the positive electrode current collection foil 11S of the positive electrode 11 are bonded to each other.

The positive electrode current collection plate 21 and the positive electrode current collection foil 11S are bonded by ultrasonic waves. In the producing process, as illustrated in Fig. 7, the positive electrode current collection plate 21 and the positive electrode current collection foil 11S are bonded by ultrasonic waves. In the ultrasonic bonding, the positive electrode current collection plate 21 and the positive electrode current collection foil 11S are likely to elongate in the direction intersecting with their stacking direction as compared with heat weld bonding and laser welding. Here, since the stiffness of the second stiff portion 21q is relatively high, the positive electrode current collection plate 21 is capable of suppressing elongation in the direction intersecting with the stacking direction. By suppressing the elongation of the positive electrode current collection plate 21 and the positive electrode current collection foil 11S in the direction intersecting with the stacking direction during the ultrasonic bonding, the energy of the ultrasonic waves input to the positive electrode current collection plate 21 and the positive electrode current collection foil 11S is likely to be absorbed into the positive electrode current collection plate 21 and the positive electrode current collection foil 11S. As a result, the positive electrode current collection plate 21 and the positive electrode current collection foil 11S are easy to be bonded. Therefore, even if the ultrasonic bonding is used, the second stiff portion 21q of the positive electrode current collection plate 21 and the positive electrode current collection foil 11S can be sufficiently bonded. In the ultrasonic bonding, the yield of the positive electrode current collection plate 21 and the charge/discharge body 10 including the positive electrode 11 can be improved.

As illustrated in Fig. 5, the positive electrode current collection plate 21 has the second thickness t2 of the second stiff portion 21q thinner than the first thickness t1 of the first stiff portion 21p in the lateral direction Y of the battery. In the producing process, as illustrated in Fig. 6, the second stiff portion 21q is formed by pressing a part of the positive electrode current collection plate 21. The stiffness of the second stiff portion 21q becomes higher than that of the first stiff portion 21p by pressing-based cold working. According to such a configuration, in the positive electrode current collection plate 21, the second stiff portion 21q can be configured by pressing only the second stiff portion 21q to be thinned from a state in which the first stiff portion 21p and the second stiff portion 21q are equal in thickness to each other. Therefore, the stiffness of the second stiff portion 21q can be improved more than the stiffness of the first stiff portion 21p while easily forming the second stiff portion 21q.

The second stiff portion 21q of the positive electrode current collection plate 21 is formed by plastically deforming the positive electrode current collection plate 21 as illustrated in Fig. 6. That is, the second stiff portion 21q can be formed by cold working. According to such a configuration, the second stiff portion 21q can be easily formed. The plastic deformation of the second stiff portion 21q is performed by, for example, general-purpose press molding. Since the cold working by the press molding can easily reduce variations in working, the stiffness of the second stiff portion 21q can be improved with good accuracy.

The second thickness t2 of the second stiff portion 21q of the positive electrode current collection plate 21 is thicker than the third thickness t3 of the positive electrode current collection foil 11S bonded to the second stiff portion 21q as illustrated in Fig. 5. The third thickness t3 is the thickness of at least one positive electrode current collection foil 11S among the bundled multiple positive electrode current collection foils 11S. According to such a configuration, the second stiff portion 21q which is plastically deformed to increase the stiffness is formed in the positive electrode current collection plate 21 thicker than the positive electrode current collection foil 11S. Since the positive electrode current collection plate 21 is thicker than the positive electrode current collection foil 11S, it is possible to suppress the occurrence of wrinkles and distortions more sufficiently than the positive electrode current collection foil 11S. Therefore, the press molding of the positive electrode current collection plate 21 is easier than the press molding of the positive electrode current collection foil 11S. Therefore, the positive electrode current collection plate 21 is capable of forming the second stiff portion 21q more easily than the positive electrode current collection foil 11S.

The first stiff portion and the second stiff portion may be provided on at least one of the positive electrode 11 or the negative electrode 12 among the electrodes. The second stiff portion 21q may be configured to be provided only in the positive electrode 11. As compared with copper, aluminum has a higher rate of stiffness improvement due to work hardening. Therefore, the positive electrode current collection plate 21 containing aluminum is more effective in improving stiffness due to the work hardening than the negative electrode current collection foil 12S of the negative electrode 12 containing copper. Therefore, the second stiff portion 21q is provided only on the side of the positive electrode 11 where the effect of improving stiffness due to work hardening is relatively large, whereby it is possible to suppress peeling between the positive electrode current collection plate 21 and the positive electrode current collection foil 11S.

In the producing process, for example, the stiffness is determined by Vickers hardness or Young's modulus. According to such a configuration, the stiffness can be determined by a universal modulus like Vickers hardness or Young's modulus. Therefore, it is possible to determine the stiffness of the second stiff portion 21q of the positive electrode current collection plate 21 with good accuracy.

In the producing process, as illustrated in Fig. 6, the reduction rate S of the thickness of the second stiff portion 21q is set to 0%<S≤10% by pressing the second stiff portion 21q of the positive electrode current collection plate 21. According to such a configuration, the stiffness of the second stiff portion 21q of the positive electrode current collection plate 21 can be sufficiently enhanced. Specifically, for example, when the aluminum contained in the positive electrode current collection plate 21 is subjected to cold working by rolling so as to reduce the thickness by 3%, the hardness (stiffness) defined by the Vicker hardness can be relatively increased by about 25%. Here, aluminum can reduce the Young's modulus by about 5% when the thickness is reduced by 3%. Similarly, aluminum can relatively increase the Vickers hardness by about 35% when the thickness is reduced by 5%. Likewise, aluminum can relatively increase the Vickers hardness by about 50% when the thickness is reduced by 10%.

### [Second Embodiment]

In the second embodiment, the positive electrode 111 side will be described. In the second embodiment, the configuration and effect on the negative electrode side are the same as the configuration and effect on the positive electrode 111 side. Therefore, description about the negative electrode side will be omitted.

### (Configuration of Battery 2 according to Second Embodiment)

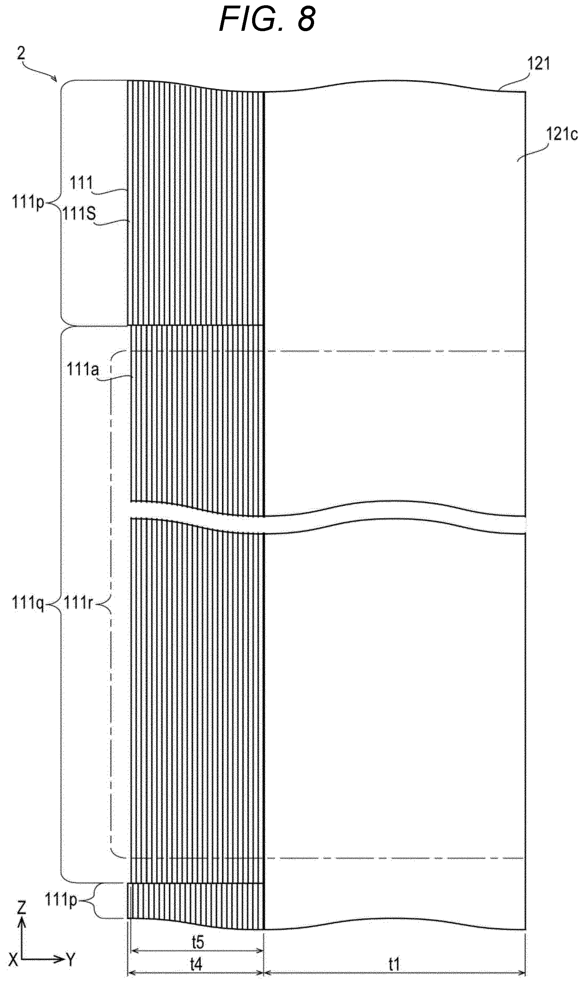

The configuration of the battery 2 according to the second embodiment will be described with reference to Fig. 8.

The battery 2 according to the second embodiment differs from the battery 1 according to the first embodiment in that the positive electrode current collection foil 111S of the positive electrode 111 is provided with the first stiff portion 111p and the second stiff portion 111q. The positive electrode 111 is similar in configuration to the positive electrode 11 except that the positive electrode current collection foil 111S is provided with the second stiff portion 111q and the bonding portion 111r. The positive electrode current collection plate 121 is similar in configuration to the positive electrode current collection plate 21 except that the second stiff portion is not provided. In the battery 2 according to the second embodiment, the same components as those of the battery 1 according to the first embodiment are denoted by the same reference numerals, and description thereof will be omitted.

As illustrated in Fig. 8, the positive electrode current collection foil 111S includes the first stiff portion 111p and the second stiff portion 111q. The first stiff portion 111p has predetermined stiffness. The second stiff portion 111q is adjacent to the first stiff portion 111p along the height direction Z of the battery 2 and is higher in stiffness than the first stiff portion 111p. In the direction along the lateral direction Y of the battery 2, a second thickness t5 of the second stiff portion 111q is thinner than a first thickness t4 of the first stiff portion 111p. The second stiff portion 111q is formed by plastically deforming a portion adjacent to the positive electrode current collection plate 121 by, for example, cold working. The thickness of the second stiff portion 111q is equivalent to the thickness of the first stiff portion 111p in a state before the cold working. That is, the second stiff portion 111q is rolled from the first thickness t4 to the second thickness t5 accompanying the cold working.

The second stiff portion 111q of the positive electrode current collection foil 111S is bonded to the current collection portion 121c of the positive electrode current collection plate 121. The bonding portion 111r included in the second stiff portion 111q is bonded to the current collection portion 121c of the positive electrode current collection plate 121. The bonding portion 111r is bonded to the positive electrode current collection plate 121 by ultrasonic waves.

### (Producing Method of Battery 2 according to Second Embodiment)

In the normal producing method of the battery 2, the bundled positive electrode current collection portion 111a is compressed in the lateral direction Y of the battery 2 in a state in which the positive electrode 111, the separator 13, and the negative electrode 12 are wound, so that the gap is removed. At this time, the second stiff portion 111q can be formed in the positive electrode current collection foil 111S when the positive electrode current collection portion 111a is pressed so as to partially plastically deform. A portion which does not plastically deform the positive electrode current collection portion 111a corresponds to the first stiff portion 111p.

Specifically, the convex portion of the mold in which positive electrode current collection portion 111a in the bundled state illustrated in Fig. 4 is sandwiched and compressed along the lateral direction Y of the battery 1 is made into two stages. In the mold, a relatively protruding portion and a relatively non-protruding portion are provided along the height direction Z of the battery 1 thereby to form the convex portion in two stages. The second stiff portion 111q is formed by compressing and plastically deforming the positive electrode current collection portion 111a by the relatively protruding portion of the convex portion. At the same time, the relatively non-protruding portion of the convex portion only compresses the positive electrode current collection portion 111a to form the first stiff portion 111p. Specifically, the positive electrode current collection portion 111a is processed from the wound and bundled state illustrated in Fig. 4 into the compressed state in the lateral direction Y of the battery 1 illustrated in Fig. 2. At this time, the second stiff portion 111q is formed on the positive electrode current collection portion 111a by the relatively protruding portion of the convex portion of the mold. At the same time, the first stiff portion 111p is formed on the positive electrode current collection portion 111a by the relatively non-protruding portion of the convex portion of the mold.

Further, after forming the second stiff portion 111q by partially plastically deforming the positive electrode current collection portion 111a in a linearly extended state, the positive electrode current collection portion 111a in the wound and bundled state may be compressed.

In this producing process, the bonding portion 111r of the positive electrode current collection foil 111S and the positive electrode current collection plate 121 are bonded by ultrasonic waves.

The producing method of the battery 2 other than the above is the same as the producing method of the battery 1 according to the first embodiment.

### (Effects of Battery 2 according to Second Embodiment and Producing Method of Battery 2)

A description will be made about the effects of the battery 2 and the producing method of the battery 2.

In the battery 2, the positive electrode current collection foil 111S is provided with the second stiff portion 111q. According to the battery 2, the reliability of the battery 2 can be improved by the sufficiently bonded positive electrode current collection plate 121 and second stiff portion 111q of the positive electrode current collection foil 111S. Also, according to the producing method of the battery 2, the reliability and productivity of the battery 2 can be improved by suppressing the bonding failure between the positive electrode current collection plate 121 and the positive electrode 111. Further, according to such a configuration, since variations in the physical properties of the positive electrode current collection foil 111S can be suppressed, materials which have large variations in the physical property but are inexpensive can be used.

### [Third Embodiment]

In the third embodiment, the positive electrode 111 side will be described. In the third embodiment, the configuration and effect on the negative electrode side are the same as the configuration and effect on the positive electrode 111 side. Therefore, description about the negative electrode side will be omitted.

### (Configuration of Battery 3 according to Third Embodiment)

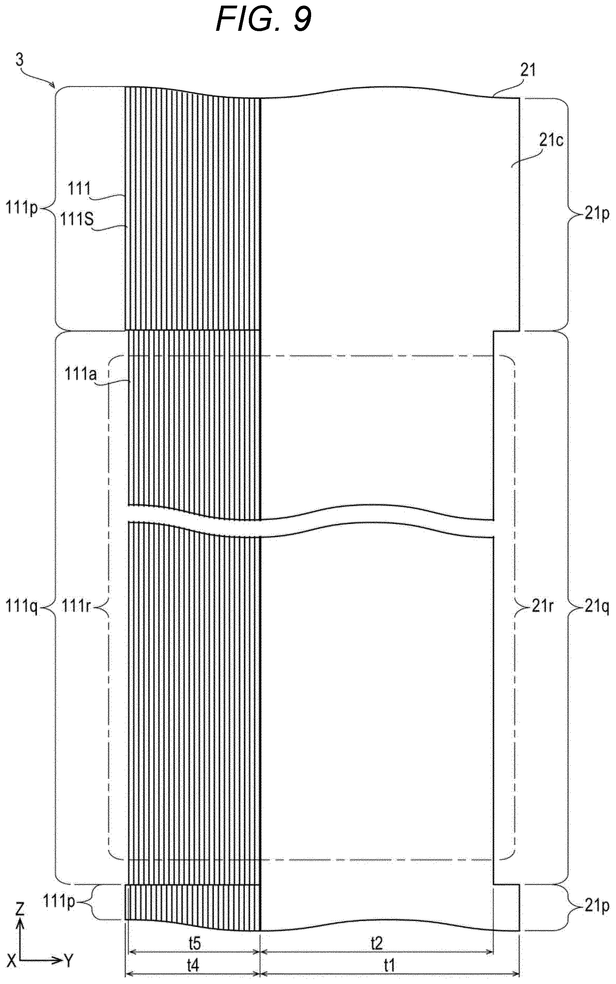

The configuration of the battery 3 according to the third embodiment will be described with reference to Fig. 9.

In the battery 3 according to the third embodiment, the positive electrode current collection plate 21 in the first embodiment and the positive electrode current collection foil 111S of the positive electrode 111 in the second embodiment are bonded. In the battery 3 according to the third embodiment, the same components as those of the battery 1 according to the first embodiment or the battery 2 according to the second embodiment are given the same reference numerals, and their description will be omitted.

The bonding portion 111r included in the second stiff portion 111q of the positive electrode current collection foil 111S and the second stiff portion 21q of the positive electrode current collection plate 21 are laminated and bonded as illustrated in Fig. 9.

### (Producing Method of Battery 3 according to Third Embodiment)

In the producing method of the battery 3, for example, the bonding portion 111r of the positive electrode current collection foil 111S and the second stiff portion 21q of the positive electrode current collection plate 21 are bonded.

The producing method of the battery 3 other than the above is the same as the producing methods of the battery 1 according to the first embodiment and the battery 2 according to the second embodiment.

### (Effects of Battery 3 according to Third Embodiment and Producing Method of Battery 3)

The effects of the battery 3 and the producing method of the battery 3 will be described.

In the battery 3, the positive electrode current collection plate 21 is provided with the second stiff portion 21q. Also, in the battery 3, the positive electrode current collection foil 111S is provided with the second stiff portion 111q. According to the battery 3, the reliability of the battery 3 can be improved by the second stiff portion 111q of the positive electrode current collection plate 21 and the second stiff portion 111q of the positive electrode current collection foil 111S both sufficiently bonded. In addition, according to the producing method of the battery 3, the reliability and productivity of the battery 3 can be improved by suppressing the bonding failure between the positive electrode current collection plate 21 and the positive electrode 111. Further, according to such a configuration, since variations in the physical properties of the positive electrode current collection plate 21 and the positive electrode current collection foil 111S can be suppressed, materials which have large variations in the physical property but are inexpensive can be used.

### [Fourth Embodiment]

In the fourth embodiment, the positive electrode 11 side will be described. In the fourth embodiment, the configuration and effect on the negative electrode side are the same as the configuration and effect on the positive electrode 11 side. Therefore, description about the negative electrode side will be omitted.

### (Configuration of Battery 4 according to Fourth Embodiment)

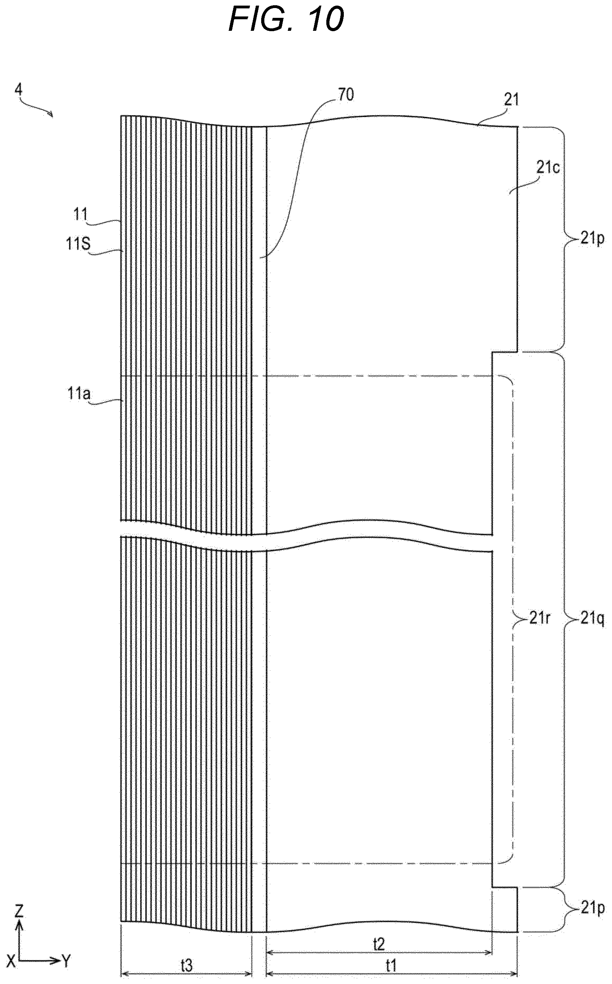

The configuration of the battery 4 according to the fourth embodiment will be described with reference to Fig. 10.

The battery 4 according to the fourth embodiment differs from the battery 1 according to the first embodiment, and the positive electrode current collection foil 11S and the positive electrode current collection plate 21 are bonded via an adhesive 70 (adhesive member) having conductivity. In the battery 4 according to the fourth embodiment, the same components as those of the battery 1 according to the first embodiment are denoted by the same reference numerals, and their description will be omitted.

The bonding portion 21r of the positive electrode current collection plate 21 and the positive electrode current collection foil 11S are laminated and bonded via the adhesive 70 as illustrated in Fig. 10. The adhesive 70 has conductivity. The adhesive 70 is configured by, for example, containing conductive particles in a resin having thermoplasticity. For example, epoxy or acrylic, or the like is used as the resin. For the particles, for example, gold, silver, copper, aluminum, nickel or carbon, and the like are used.

### (Producing Method of Battery 4 according to Fourth Embodiment)

In the producing method of the battery 4, for example, the positive electrode current collection foil 11S of the positive electrode 11 and the bonding portion 21r of the positive electrode current collection plate 21 are bonded via the adhesive 70. Specifically, after laminating the positive electrode current collection foil 11S and the positive electrode current collection plate 21 via the adhesive 70 interposed therebetween, at least one of the positive electrode current collection foil 11S or the positive electrode current collection plate 21 is heated to thermally cure the adhesive 70.

The producing method of the battery 4 other than the above is the same as the producing method of the battery 1 according to the first embodiment. The producing method of the battery 4 according to the fourth embodiment may be applied to the producing method of the battery 2 according to the second embodiment and the producing method of the battery 3 according to the third embodiment.

### (Effects of Battery 4 according to Fourth Embodiment and Producing Method of Battery 4)

A description will be made about the effects of the battery 4 and the producing method of the battery 4.

In the battery 4, the positive electrode current collection plate 21 is provided with the second stiff portion 21q. Further, in the battery 4, the second stiff portion 21q of the positive electrode current collection plate 21 and the positive electrode current collection foil 11S are bonded via the adhesive 70 having conductivity. That is, the positive electrode current collection plate 21 and the positive electrode current collection foil 11S can also be bonded indirectly via the adhesive 70 without being limited to the configuration in which the positive electrode current collection plate 21 and the positive electrode current collection foil 11S are directly bonded. The adhesive 70 for the battery 4 according to the fourth embodiment may be applied to the battery 2 according to the second embodiment and the battery 3 according to the third embodiment.

### (Other Embodiments)

The battery of the present invention is not limited to the configurations described in the embodiments, and can be appropriately configured based on the contents described in the claims.

The bonding of the current collection member and the collector in the present invention is not limited to the ultrasonic bonding. The bonding of the current collection member and the collector in the present invention can be performed by laser welding, caulking bonding, or heat welding bonding.

The battery of the present invention is not limited to a lithium ion battery. The battery of the present invention can be applied to, for example, a nickel hydrogen battery, and a lead battery. The battery of the present invention is not limited to a secondary battery. The battery of the present invention can be applied to a primary battery. The battery of the present invention is not limited to a configuration in which a charge/discharge body is sealed with a container and a lid. The battery of the present invention can be applied to a configuration in which the charge/discharge body is sealed with a laminate film. Each embodiment has been described in detail or briefly for easy understanding of the present invention, and does not necessarily have to include all the configurations described, or may include unillustrated configurations. Also, a part of the configuration of one embodiment may be deleted, replaced with the configuration of another embodiment, or combined with the configuration of another embodiment. Reference Signs List

1, 2, 3, 4: battery,
10: charge/discharge body,
11: positive electrode (electrode),
11S: positive electrode current collection foil (collector),
12: negative electrode (electrode),
12S: negative electrode current collection foil (collector),
21: positive electrode current collection plate (current collection member),
21p: first stiff portion,
21q: second stiff portion,
21r: bonding portion,
22: negative electrode current collection plate (current collection member),
22p: first stiff portion,
22q: second stiff portion,
22r: bonding portion,
70: adhesive (adhesive member),
111: positive electrode (electrode),
111S: positive electrode current collection foil (collector),
111p: first stiff portion,
111q: second stiff portion
111r: bonding portion,
121: positive electrode current collection plate (current collection member),
S: reduction rate,
t1, t4: first thickness (thickness of first stiff portion),
t2, t5: second thickness (thickness of second stiff portion),
t3: third thickness (thickness of current collection foil or current collection plate bonded to second stiff portion).

## Claims

1. A battery, comprising:
a charge/discharge body including electrodes each having a collector and an active material; and
a current collection member bonded to the collector,
wherein at least one selected from the group of the current collection member and the collector includes a first stiff portion having predetermined stiffness, and a second stiff portion adjacent to the first stiff portion and higher in stiffness than the first stiff portion, and
wherein the second stiff portion provided in at least one selected from the group of the current collection member and the collector, and the other of the current collection member and the collector are bonded to each other.

2. The battery according to claim 1, wherein a bonding portion included in the second stiff portion provided in at least one selected from the group of the current collection member and the collector, and the other of the current collection member and the collector are bonded to each other.

3. The battery according to claim 1 or 2, wherein the current collection member and the collector are bonded by ultrasonic waves.

4. The battery according to any one of claims 1 to 3, wherein in the current collection member or the collector, a second thickness of the second stiff portion is thinner than a first thickness of the first stiff portion.

5. The battery according to claim 4, wherein the second stiff portion is formed by plastically deforming at least one selected from the group of the current collection member and the collector.

6. The battery according to any one of claims 1 to 5, wherein the second thickness of the second stiff portion provided in at least one selected from the group of the current collection member and the collector is thicker than a third thickness of the other of the current collection member and the collector.

7. The battery according to any one of claims 1 to 6,
wherein the first stiff portion and the second stiff portion are provided on at least one side of a positive electrode or a negative electrode of the electrodes,
wherein the current collection member or the collector on the positive electrode side contains aluminum, and
wherein the current collection member or the collector on the negative electrode side contains copper.

8. The battery according to claim 7, wherein the first stiff portion and the second stiff portion are provided only on the positive electrode side.

9. The battery according to any one of claims 1 to 8, wherein the current collection member and the collector are bonded via an adhesive member having conductivity.

10. A method for producing a battery including: a charge/discharge body including electrodes each having a collector and an active material; and a current collection member bonded to the collector, and in which at least one selected from the group of the current collection member and the collector includes a first stiff portion having predetermined stiffness, and a second stiff portion adjacent to the first stiff portion and higher in stiffness than the first stiff portion,
the method comprising:
a producing process of laminating and bonding the second stiff portion provided in at least one selected from the group of the current collection member and the collector, and the other of the current collection member and the collector to each other.

11. The method for producing a battery according to claim 10, wherein in the producing process, the current collection member and the collector are bonded by ultrasonic waves.

12. The method for producing a battery according to claim 10 or 11, wherein in the producing process, the stiffness of the second stiff portion is made higher than the stiffness of the first stiff portion by pressing the second stiff portion.

13. The method for producing a battery according to claim 12, wherein in the producing process, the stiffness is determined by Vickers hardness or Young's modulus.

14. The method for producing a battery according to any one of claims 10 to 13, wherein in the producing process, a reduction ratio S of the thickness of the second stiff portion is set to 0%<S≤10% by pressing the second stiff portion.
